# EUROPEAN PATENT APPLICATION

(11) **EP 4 160 736 A1**
(43) Date of publication of application: **05.04.2023**
(21) Application number: 20938345.4
(22) Date of filing: 26.05.2020
(51) Int. Cl.: H01M 4/36, H01M 4/505, H01M 4/525, H01M 4/58, H01M 10/052, H01M 10/0562

(54) **SECONDARY BATTERY POSITIVE ELECTRODE**

(71) Applicant: NISSAN MOTOR CO., LTD., Kanagawa 221-0023 (JP); RENAULT s.a.s., 92100 Boulogne-Billancourt (FR)
(72) Inventor: SAITO, Naoto, Atsugi-shi, Kanagawa 243-0123 (JP); TAKADA, Harumi, Atsugi-shi, Kanagawa 243-0123 (JP)
(74) Representative: Grünecker Patent- und Rechtsanwälte PartG mbB
(86) International application number: PCT/IB2020/000525
(87) International publication number: WO 2021/240194

(57) **Abstract**

[Problem] Means for suppressing destruction of particles of positive electrode active material due to the pressing pressure at the time of producing a positive electrode which constitutes an all-solid battery such as an all-solid lithium-ion secondary battery, thereby inhibiting decrease in a battery capacity.

[Solution] In a positive electrode for a secondary battery which contains a positive electrode active material layer containing a positive electrode active material consisting of secondary particles and a solid electrolyte, the average particle diameter of the secondary particles is controlled into 4.9 um or less, the average particle diameter of the primary particles which constitute the secondary particles is controlled into 1.2 um or more, and the average particle diameter of the primary particles of the solid electrolyte is controlled into 0.8 um or less.

## Description

### TECHNICAL FIELD

The present invention relates to a positive electrode for a secondary battery.

### BACKGROUND ART

In recent years, in order to fight global warming, there is a strong need for reduction of the amount of carbon dioxide. In the automobile industry, there are increasing expectations for a reduction of carbon dioxide emissions by introduction of electric vehicles (EV) and hybrid electric vehicles (HEV), and development of non-aqueous electrolyte secondary batteries such as secondary batteries for motor driving, which are key to practical application of such vehicles, has been actively conducted.

A secondary battery for motor driving is required to have extremely high output characteristics and high energy as compared with a lithium-ion secondary battery for consumer use used in a mobile phone, a notebook computer, and the like. Therefore, a lithium-ion secondary battery having the highest theoretical energy among all practical batteries has attracted attention, and is currently being rapidly developed.

Here, lithium-ion secondary batteries that are currently widespread use a combustible organic electrolyte solution as an electrolyte. In such liquid-based lithium-ion secondary batteries, safety measures against liquid leakage, short circuit, overcharge, and the like are more strictly required than other batteries.

Therefore, in recent years, research and development on an all-solid battery such as an all-solid lithium-ion secondary battery using an oxide-based or sulfide-based solid electrolyte as an electrolyte have been actively conducted. The solid electrolyte is a material mainly made of an ion conductor that enables ion conduction in a solid. For this reason, in an all-solid lithium-ion secondary battery, in principle, various problems caused by combustible organic electrolyte solution do not occur unlike the conventional liquid-based lithium-ion secondary battery. In general, use of a high-potential and large-capacity positive electrode material and a large-capacity negative electrode material can achieve significant improvement in output density and energy density of a battery.

Incidentally, a lithium metal composite oxide or the like may be used as a positive electrode active material of a lithium-ion secondary battery, and a powder of the composite oxide may include primary particles and secondary particles formed by aggregation of the primary particles. Conventionally, it has been proposed that a powdery lithium composite oxide of monodisperse primary particles (single particles) mainly containing one element selected from the group of cobalt, nickel, and manganese and lithium has an advantage of having no grain boundary and hardly causing destruction or breakage at the time of molding a positive electrode material or the like.

Meanwhile, in a case where such a composite oxide composed of single particles is used as a positive electrode active material, there is a problem that when monodisperse primary particles are small, the fluidity at the time of filling is deteriorated. Further, in a liquid-based battery using a liquid electrolyte (electrolyte solution) as an electrolyte, it is also known that secondary particles having voids are preferably present in the positive electrode active material in order to improve cycle characteristics, from the viewpoint that the electrolyte solution penetrates well.

From the above viewpoint, JP 2019-160571 A proposes a technique of controlling the blending ratio of the single particles and the secondary particles constituting the positive electrode active material to a value within a specific range in order to improve the fluidity at the time of filling while suppressing the occurrence of destruction of particles due to the pressing pressure at the time of producing an electrode.

### SUMMARY OF INVENTION

### Technical Problem

According to a technique disclosed in JP 2019-160571 A, there is an advantage of suppressing the occurrence of destruction of particles due to the pressing pressure at the time of producing an electrode, and Examples of JP 2019-160571 A shows that the percentage of the particles broken is reduced.

Here, in an electrode constituting an all-solid battery such as an all-solid lithium-ion secondary battery including little or no liquid electrolyte (electrolyte solution), when there is a void that is not filled with the electrolyte solution, the portion is not involved in the battery reaction at all and becomes a dead space. For this reason, in the production of the all-solid battery, it is necessary to perform a pressing process using a pressing pressure that is incomparably larger than a pressing pressure at the time of producing an electrode of a liquid-based battery. Thus, the level of resistance to destruction of particles due to the pressing pressure, which is required for the positive electrode active material, is much higher in the all-solid battery than in the liquid-based battery. In this regard, according to the study of the present inventors, it has been found that the use of only the positive electrode active material as described in JP 2019-160571 A is not sufficient for the resistance to the pressing pressure applied at the time of producing the all-solid battery, and there still occurs a problem that destruction of particles of positive electrode active material occurs at the time of pressing, thereby decreasing the battery capacity.

Therefore, an object of the present invention is to provide a means for suppressing destruction of particles of positive electrode active material due to the pressing pressure at the time of producing a positive electrode which constitutes an all-solid battery such as an all-solid lithium-ion secondary battery, thereby inhibiting decrease in a battery capacity.

The present inventors have carried out a diligent study in view of the problem described above. As a result, the inventors have found that the above problem can be solved by controlling the average particle diameter of the secondary particles of the positive electrode active material contained in the positive electrode active material layer and primary particles constituting the secondary particles and the average particle diameter of the solid electrolyte contained in the positive electrode active material layer into values within a predetermined range, and have completed the present invention.

### Solution to Problem

According to one aspect of the present invention, there is provided a positive electrode for a secondary battery including a positive electrode active material layer which contains a positive electrode active material consisting of secondary particles and a solid electrolyte, in which an average particle diameter of the secondary particles is 4.9 um or less, an average particle diameter of primary particles which constitutes the secondary particles is 1.2 um or more, and an average particle diameter of primary particles of the solid electrolyte is 0.8 um or less.

### BRIEF DESCRIPTION OF DRAWINGS

Fig. 1 is a perspective view illustrating an appearance of a flat laminate type all-solid lithium-ion secondary battery as one embodiment of a lithium-ion secondary battery according to the present invention.
Fig. 2 is a cross-sectional view taken along line 2-2 illustrated in Fig. 1.
Fig. 3 is a cross-sectional view schematically illustrating a bipolar type (bipolar type) all-solid lithium-ion secondary battery as one embodiment of the lithium-ion secondary battery according to the present invention.

### DESCRIPTION OF EMBODIMENTS

### <<Secondary Battery>>

One aspect of the present invention is a positive electrode for a secondary battery including a positive electrode active material layer which contains a positive electrode active material consisting of secondary particles and a solid electrolyte, in which an average particle diameter of the secondary particles is 4.9 um or less, an average particle diameter of primary particles constituting the secondary particles is 1.2 um or more, and an average particle diameter of primary particles of the solid electrolyte is 0.8 um or less. According to the positive electrode for a secondary battery according to the present invention, it is possible to suppress destruction of particles of positive electrode active material due to the pressing pressure at the time of producing a positive electrode which constitutes an all-solid battery such as an all-solid lithium-ion secondary battery, thereby inhibiting decrease in a battery capacity.

Hereinafter, the embodiments of the positive electrode for a secondary battery according to the present aspect will be described with reference to the drawings, but the technical scope of the present invention should be determined based on the description of the claims, and is not limited to the following embodiments. The dimensional ratios of the drawings are exaggerated for convenience of description and may differ from the actual ratios.

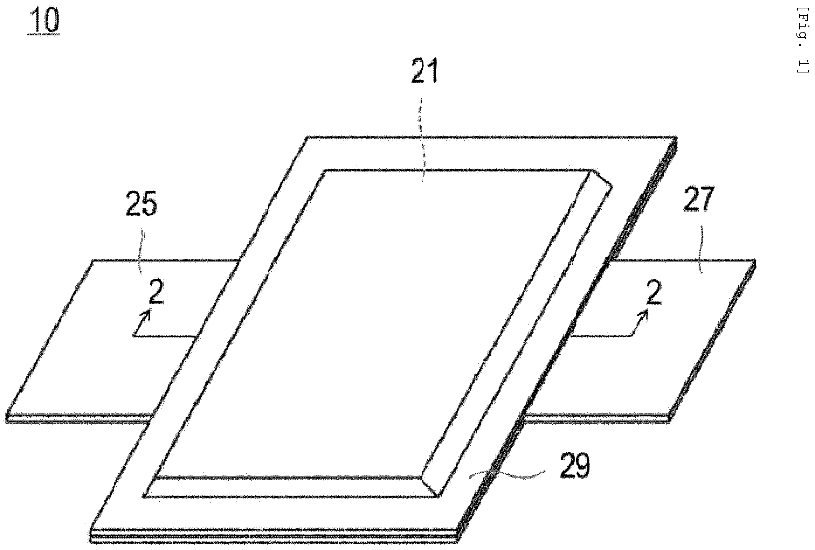

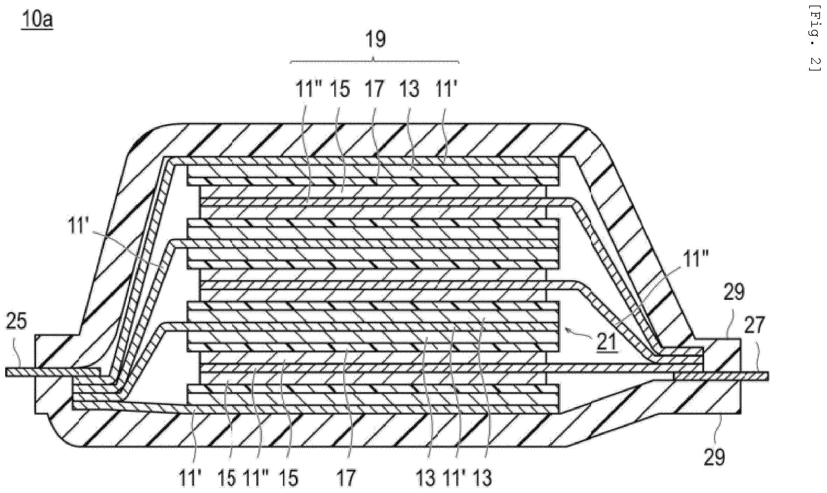

Fig. 1 is a perspective view illustrating an appearance of a flat laminate type all-solid lithium-ion secondary battery as one embodiment of a positive electrode for a secondary battery according to the present invention. Fig. 2 is a cross-sectional view taken along line 2-2 illustrated in Fig. 1. The battery is formed into the laminate type, thereby allowing the battery to be compact and have a high capacity. In the present specification, an embodiment will be described by taking, as an example, a case where a secondary battery is a flat laminate type (non-bipolar type) lithium-ion secondary battery illustrated in Figs. 1 and 2 (hereinafter also simply referred to as "laminate type battery"). However, in the case of viewing the present invention in an electric connection form (electrode structure) in the lithium-ion secondary battery according to the present aspect, the present invention can be applied to both a non-bipolar type (internal parallel connection type) battery and a bipolar type (internal serial connection type) battery.

As illustrated in Fig. 1, a laminate type battery 10 has a rectangular flat shape, and a negative electrode current collecting plate 25 and a positive electrode current collecting plate 27 for extracting electric power are extended from both sides of the battery. A power-generating element 21 is wrapped in a battery outer casing material (laminate film 29) of the laminate type battery 10a, and the periphery of the battery outer casing material is heat-sealed, and the power-generating element 21 is hermetically sealed in a state where the negative electrode current collecting plate 25 and the positive electrode current collecting plate 27 are extended to the outside.

The lithium-ion secondary battery according to the present aspect is not limited to a laminate type flat shape. A wound type lithium ion secondary battery is not particularly limited, and may have a cylindrical shape, or may have a rectangular flat shape obtained by deforming such a cylindrical shape. As for the lithium-ion secondary battery having the cylindrical shape, a laminate film may be used or a conventional cylindrical can (metal can) may be used as an outer casing material thereof, and the outer casing material is not particularly limited. Preferably, a power-generating element is housed in a laminate film including aluminum. According to this form, weight reduction can be achieved.

In addition, the extending of the current collecting plates (25 and 27) illustrated in Fig. 1 is also not particularly limited. The negative electrode current collecting plate 25 and the positive electrode current collecting plate 27 may be extended from the same side, or each of the negative electrode current collecting plate 25 and the positive electrode current collecting plate 27 may be divided into a plurality of pieces and extended from each side, and the extending is not limited to that illustrated in Fig. 1. In addition, in a wound type lithium-ion battery, for example, terminals may be formed by using a cylindrical can (metal can) instead of a tab.

As illustrated in Fig. 2, the laminate type battery 10a of the present embodiment has a structure in which the flat and substantially rectangular power-generating element 21 in which a charge and discharge reaction actually proceeds is sealed inside the laminate film 29 as the battery outer casing material. Here, the power-generating element 21 has a configuration in which a positive electrode, a solid electrolyte layer 17, and a negative electrode are laminated. The positive electrode has a structure in which a positive electrode active material layer 15 containing a positive electrode active material is disposed on both surfaces of a positive electrode current collector 11". The negative electrode has a structure in which a negative electrode active material layer 13 containing a negative electrode active material is disposed on both surfaces of a negative electrode current collector 11'. Specifically, the positive electrode, the solid electrolyte layer, and the negative electrode are laminated such that one positive electrode active material layer 15 and the negative electrode active material layer 13 adjacent thereto face each other with the solid electrolyte layer 17 interposed therebetween. Thus, the positive electrode, solid electrolyte layer, and negative electrode that are adjacent constitute one single battery layer 19. Therefore, it can be said that the laminate type battery 10a illustrated in Fig. 1 has a configuration in which a plurality of single battery layers 19 is laminated to be electrically connected in parallel.

As illustrated in Fig. 2, although the positive electrode active material layer 15 is disposed on only one surface of each of outermost positive electrode current collectors located in both outermost layers of the power-generating element 21, the active material layer may be provided on both surfaces. In other words, instead of using a current collector exclusively for an outermost layer provided with the active material layer only on one surface thereof, a current collector provided with the active material layer on both surfaces thereof may be used as it is as an outermost current collector. In some cases, the negative electrode active material layer 13 and the positive electrode active material layer 15 may be used as the negative electrode and the positive electrode, respectively, without using the current collectors (11' and 11").

The negative electrode current collector 11' and the positive electrode current collector 11" have a structure in which a negative electrode current collecting plate (tab) 25 and a positive electrode current collecting plate (tab) 27 which are electrically connected to the respective electrodes (the positive electrode and the negative electrode) are respectively attached to the negative electrode current collector 11' and the positive electrode current collector 11" and are led to an outside of the laminate film 29 so as to be sandwiched between ends of the laminate film 29 as the outer casing material. The positive electrode current collecting plate 27 and the negative electrode current collecting plate 25 may be attached to the positive electrode current collector 11" and the negative electrode current collector 11' of the respective electrodes with a positive electrode lead and a negative electrode lead (not illustrated) interposed therebetween, respectively by ultrasonic welding, resistance welding, or the like as necessary.

Hereinafter, main constituent members of the secondary battery to which the positive electrode for a secondary battery according to the present aspect is applied will be described.

### [Current Collector]

A current collector has a function of mediating transfer of electrons from electrode active material layers. A material constituting the current collector is not particularly limited. As the material constituting the current collector, for example, a metal or a resin having conductivity can be adopted.

Specific examples of the metal include aluminum, nickel, iron, stainless steel, titanium, copper, and the like. In addition to these, a clad material of nickel and aluminum, a clad material of copper and aluminum, or the like may be used. Further, a foil in which a metal surface is coated with aluminum may be used. Above all, aluminum, stainless steel, copper, and nickel are preferred from the viewpoint of the electron conductivity, the battery operating potential, the adhesion of the negative electrode active material by sputtering to the current collector, and the like.

Examples of the latter resin having conductivity include a resin obtained by adding a conductive filler to a non-conductive polymer material as necessary.

Examples of the non-conductive polymer material include polyethylene (PE; high density polyethylene (HDPE), low density polyethylene (LDPE), and the like), polypropylene (PP), polyethylene terephthalate (PET), polyether nitrile (PEN), polyimide (PI), polyamide imide (PAI), polyamide (PA), polytetrafluoroethylene (PTFE), styrene-butadiene rubber (SBR), polyacrylonitrile (PAN), polymethyl acrylate (PMA), polymethyl methacrylate (PMMA), polyvinyl chloride (PVC), polyvinylidene fluoride (PVdF), polystyrene (PS), and the like. Such a non-conductive polymer material can have excellent potential resistance or solvent resistance.

A conductive filler may be added to the conductive polymer material or the non-conductive polymer material as necessary. Particularly, in a case where a resin serving as a base material of the current collector is composed only of a non-conductive polymer, a conductive filler is essential to impart conductivity to the resin.

The conductive filler can be used without particular limitation as long as the conductive filler is a substance having conductivity. Examples of materials excellent in conductivity, potential resistance, or lithium-ion blocking property include metals and conductive carbon. Examples of the metals are not particularly limited, but preferably include at least one metal selected from the group consisting of Ni, Ti, Al, Cu, Pt, Fe, Cr, Sn, Zn, In, and Sb, or an alloy or a metal oxide containing these metals. The conductive carbon is not particularly limited. Preferably, examples of the conductive carbon include at least one selected from the group consisting of acetylene black, Vulcan (registered trademark), Black Pearl (registered trademark), carbon nanofiber, Ketjen black (registered trademark), carbon nanotube, carbon nanohorn, carbon nanoballoon, and fullerene.

The addition amount of the conductive filler is not particularly limited as long as sufficient conductivity can be imparted to the current collector, and is generally 5 to 80 mass% with respect to a total mass of 100 mass% of the current collector.

The current collector may have a single-layer structure made of a single material, or may have a laminated structure in which layers made of these materials are appropriately combined. From the viewpoint of weight reduction of the current collector, it is preferable that the current collector includes at least a conductive resin layer made of a resin having conductivity. From the viewpoint of blocking the movement of lithium ions between single battery layers, a metal layer may be provided in a part of the current collector. Further, as long as a negative electrode active material layer and a positive electrode active material layer to be described later have conductivity by themselves and can have a current collecting function, a current collector as a member different from these electrode active material layers is not necessarily used. In such an embodiment, the negative electrode active material layer described later as it is constitutes a negative electrode, and the positive electrode active material layer described later as it is constitutes a positive electrode.

### [Positive Electrode Active Material Layer]

In the positive electrode for a secondary battery according to the present aspect, the positive electrode active material layer contains a positive electrode active material. As the positive electrode active material, a metal oxide is preferably used. In addition, a sulfur simple substance or the like may be used as the positive electrode active material.

The metal oxide that can function as the positive electrode active material is not particularly limited, and examples thereof include layered rock salt-type active materials such as LiCoO₂, LiMnO₂, LiNiO₂, LiVO₂, and Li(Ni-Mn-Co)O₂, spinel-type active materials such as LiMn₂O₄ and LiNi_{0.5}Mn_{1.5}O₄, olivine-type active materials such as LiFePO₄ and LiMnPO₄, and Si-containing active materials such as Li₂FeSiO₄ and Li₂MnSiO₄. Examples of the metal oxide other than those described above include Li₄Ti₅O₁₂. Among the metal oxides described above, a composite oxide containing lithium and nickel is preferably used, and Li(Ni-Mn-Co)O₂ and a composite oxide in which a part of these transition metals is substituted with other elements (hereinafter, also simply referred to as "NMC composite oxide") are more preferably used. The NMC composite oxide has a layered crystal structure in which a lithium atom layer and a transition metal (Mn, Ni, and Co are orderly arranged) atom layer are alternately laminated with an oxygen atom layer interposed therebetween. One Li atom is contained per atom of a transition metal M, the amount of Li that can be taken out is twice that of a spinel type lithium manganese oxide, i.e., supply capacity is doubled, and the supply capacity is high.

As described above, the NMC composite oxide also includes a composite oxide in which some of transition metal elements are substituted with other metal elements. Examples of other elements in this case include Ti, Zr, Nb, W, P, Al, Mg, V, Ca, Sr, Cr, Fe, B, Ga, In, Si, Mo, Y, Sn, V, Cu, Ag, Zn, and the like. Ti, Zr, Nb, W, P, Al, Mg, V, Ca, Sr, and Cr are preferred, and Ti, Zr, P, Al, Mg, and Cr are more preferred. Ti, Zr, Al, Mg, and Cr are still more preferred from the viewpoint of improving cycle characteristics.

Since the NMC composite oxide has a high theoretical discharge capacity, and the NMC composite oxide preferably has a composition expressed by general formula (1): LiₐNi_{b}Mn_{c}Co_{d}MₓO₂ (where a, b, c, d, and x satisfy 0.98 ≤ a ≤ 1.2, 0.6 ≤ b ≤ 0.9, 0 < c ≤ 0.4, 0 < d ≤ 0.4, 0 ≤ x ≤ 0.3, and b + c + d + x = 1. M is at least one element selected from Ti, Zr, Nb, W, P, Al, Mg, V, Ca, Sr, and Cr). Here, a represents an atomic ratio of Li, b represents an atomic ratio of Ni, c represents an atomic ratio of Mn, d represents an atomic ratio of Co, and x represents an atomic ratio of M.

Here, a ratio of a content of the metal oxide to a total amount of 100 mass% of the positive electrode active material is preferably 50 mass% or more, more preferably 70 mass% or more, still more preferably 80 mass% or more, yet still more preferably 90 mass% or more, particularly preferably 95 mass% or more, and most preferably 100 mass .

In the positive electrode for a secondary battery according to the present aspect, the positive electrode active material contained in the positive electrode active material layer includes secondary particles. Here, the "secondary particle" means an aggregate formed by aggregation of primary particles (single particles). The positive electrode for a secondary battery according to the present aspect is characterized in that the average particle diameter (arithmetic average diameter) of secondary particles constituting the positive electrode active material is controlled into 4.9 um or less, and the average particle diameter (arithmetic average diameter) of primary particles constituting the secondary particles is controlled into 1.2 um or more. In the present specification, the "particle diameter" means a maximum distance among distances between any two points on a contour line of the observed particle, and values of the average particle diameters of the active material and the solid electrolyte are values measured by the method described in the section of Examples described later are adopted. The lower limit of the average particle diameter of the secondary particles constituting the positive electrode active material is not particularly limited, but is usually 3.0 um or more. From the viewpoint of effectively obtaining the action and effect of the invention of the present application, it is preferably 3.6 um or more. The upper limit of the average particle diameter of the primary particles constituting the secondary particles is also not particularly limited, but is usually 2.7 um or less. From the viewpoint of effectively obtaining the action and effect of the invention of the present application, it is preferably 2.3 um or less.

In addition, a ratio of the number of single crystallite particles to the number of primary particles constituting the secondary particles is preferably 10% or more, more preferably 20% or more, and still more preferably 30% or more. With such a configuration, a positive electrode active material having a predetermined particle diameter profile of the present application is easily obtained, so this is preferred.

The method for controlling the average particle diameter of the particles constituting the positive electrode active material to the above-described configuration is not particularly limited, and there is appropriately referred to the conventionally known knowledge with which the average particle diameter of the particles of the positive electrode active material can be controlled. Specifically, for example, it is possible to refer to techniques disclosed in Patent Literatures such as JP 6574222 B and JP 5702289 B, or Non-patent Literature such as Solid State Ionics, Volume 345, February 2020, 115200, and Journal of The Electrochemical Society, 165 (5) A 1038-A1045 (2018).

The positive electrode active material layer further includes a solid electrolyte. The positive electrode active material layer includes the solid electrolyte, as a result of which the ion conductivity of the positive electrode active material layer can be improved. Examples of the solid electrolyte include a sulfide solid electrolyte and an oxide solid electrolyte. From the viewpoint of having excellent ion conductivity and further improving battery performance, a sulfide solid electrolyte is preferred.

Examples of the sulfide solid electrolyte include LiI-Li₂S-SiS₂, LiI-Li₂S-P₂O₅, LiI-Li₃PO₄-P₂S₅, Li₂S-P₂S₅, LiI-Li₃PS₄, LiI-LiBr-Li₃PS₄, Li₃PS₄, Li₂S-P₂S₅, Li₂S-P₂S₅-LiI, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, and Z is any of Ge, Zn, and Ga), Li₂S-GeS₂, Li₂S-SiS₂-Li₃PO₄, Li₂S-SiS₂-LiₓMO_{y} (where x and y are positive numbers, and M is any of P, Si, Ge, B, Al, Ga, and In), and the like. The description of "Li₂S-P₂S₅" means a sulfide solid electrolyte obtained by using a raw material composition containing Li₂S and P₂S₅, and the same applies to other descriptions.

The sulfide solid electrolyte may have, for example, a Li₃PS₄ skeleton, a Li₄P₂S₇ skeleton, or a Li₄P₂S₆ skeleton. Examples of the sulfide solid electrolyte having a Li₃PS₄ skeleton include LiI-Li₃PS₄, LiI-LiBr-Li₃PS₄, and Li₃PS₄. Examples of the sulfide solid electrolyte having a Li₄P₂S₇ skeleton include a Li-P-S-based solid electrolyte called LPS (e.g., Li₇P₃S₁₁). As the sulfide solid electrolyte, for example, LGPS expressed by Li₍₄₋ₓ₎Ge₍₁₋ₓ₎PₓS₄ (x satisfies 0 < x < 1) or the like may be used. Above all, the sulfide solid electrolyte is preferably a sulfide solid electrolyte containing a P element, and the sulfide solid electrolyte is more preferably a material containing Li₂S-P₂S₅ as a main component. Furthermore, the sulfide solid electrolyte may contain halogen (F, Cl, Br, I). Examples of the halogen-containing sulfide solid electrolyte include argyrodite type solid electrolytes (Li₆PS₅Cl and Li₆PS₅Br), and these electrolytes are also materials that can be preferably used.

In a case where the sulfide solid electrolyte is Li₂S-P₂S₅ based, a molar ratio of Li₂S and P₂S₅ is preferably within a range of Li₂S : P₂S₅ = 50 : 50 to 100 : 0, and particularly preferably within a range of Li₂S : P₂S₅ = 70 : 30 to 80 : 20.

In addition, the sulfide solid electrolyte may be sulfide glass, may be crystallized sulfide glass, or may be a crystalline material obtained by a solid phase method. The sulfide glass can be obtained, for example, by performing mechanical milling (ball milling or the like) on a raw material composition. The crystallized sulfide glass can be obtained, for example, by heat-treating sulfide glass at a temperature equal to or higher than a crystallization temperature. In addition, ion conductivity (e.g., Li ion conductivity) of the sulfide solid electrolyte at a normal temperature (25°C) is, for example, preferably 1 × 10⁻⁵ S/cm or more, and more preferably 1×10⁻⁴ S/cm or more. A value of the ion conductivity of the solid electrolyte can be measured by an AC impedance method.

Examples of the oxide solid electrolyte include a compound having a NASICON-type structure, and the like. Examples of the compound having a NASICON-type structure include a compound (LAGP) expressed by general formula: Li₁₊ₓAlₓGe₂₋ₓ(PO₄)₃ (0 ≤ x ≤ 2), a compound (LATP) expressed by general formula: Li₁₊ₓAlₓTi₂₋ₓ(PO₄)₃ (0 ≤ x ≤ 2), and the like. Other examples of the oxide solid electrolyte include LiLaTiO (e.g., Li_{0.34}La_{0.51}TiO₃), LiPON (e.g., Li_{2.9}PO_{3.3}N_{0.46}), LiLaZrO (e.g., Li₇La₃Zr₂O₁₂), and the like.

The shape of the solid electrolyte is, for example, a particle shape such as a perfectly spherical shape or an elliptically spherical shape. The positive electrode for a secondary battery according to the present aspect is characterized in that the average particle diameter (arithmetic average diameter) of primary particles of the solid electrolyte contained in the positive electrode active material layer is controlled into 0.8 um or less. The lower limit of the average particle diameter of the primary particles of the solid electrolyte is not particularly limited, but is usually 0.5 um or more.

According to the study by the present inventors, it has been found that the value of the average particle diameter of secondary particles of the positive electrode active material and primary particles constituting the secondary particles and the value of the average particle diameter of primary particles of the solid electrolyte contained in the positive electrode active material layer are controlled to be within the above ranges, so that it is possible to suppress destruction of particles of positive electrode active material even in a case where a large pressing pressure is applied at the time of producing an electrode (positive electrode), thereby inhibiting decrease in a battery capacity due to the destruction of particles. The mechanism by which the predetermined effect of the present application is exhibited by the configuration according to the present aspect is not completely clear. However, the present inventors estimate that the particles of the positive electrode active material having the above-described configuration have less surface irregularities and are less likely to get caught in each other, and further have less crystal grain boundary and have strong particle strength, whereby the occurrence of destruction of particles of positive electrode active material is suppressed.

As a result of exhibiting such an effect, according to the positive electrode for a secondary battery according to the present aspect, a positive electrode active material having improved resistance to a large pressing pressure at the time of producing an electrode is used, and thus it is possible to relatively increase the content of the positive electrode active material contained in the positive electrode active material layer as compared with the solid electrolyte, thereby obtaining a battery having a higher capacity. From such a viewpoint, the ratio of the content of the positive electrode active material to the total content of the positive electrode active material and the solid electrolyte in the positive electrode active material layer (ratio of the active material in the positive electrode active material layer) is preferably 70 vol% or more, more preferably 75 vol% or more, and still more preferably 80 vol% or more. Meanwhile, the upper limit of this value is not particularly limited, but is usually 90 vol% or less, and preferably 85 vol% or less. Further, for the same reason as described above, it is also possible to control the porosity of the positive electrode active material layer to a value smaller than the conventional porosity. This is preferable because the capacity density of the battery can be improved. Specifically, the porosity of the positive electrode active material layer in the positive electrode for a secondary battery according to the present aspect is preferably 10.1% or less, and more preferably 9.0% or less. Meanwhile, the lower limit of the porosity of the positive electrode active material layer is not particularly limited, but is usually 3.0% or more and preferably 5.0% or more. From the viewpoint of effectively obtaining the action and effect of the invention of the present application, it is more preferably 8.1% or more.

The positive electrode active material layer may further contain at least one of a conductive aid and a binder in addition to the positive electrode active material and the solid electrolyte described above.

Examples of the conductive aid include, but are not limited to, metals such as aluminum, stainless steel (SUS), silver, gold, copper, and titanium, alloys or metal oxides containing these metals; carbon such as carbon fibers (specifically, vapor grown carbon fibers (VGCF), polyacrylonitrile-based carbon fibers, pitch-based carbon fibers, rayon-based carbon fibers, and activated carbon fibers), carbon nanotubes (CNT), and carbon black (specifically, acetylene black, Ketjen black (registered trademark), furnace black, channel black, thermal lamp black, and the like). In addition, a particle-shaped ceramic material or resin material coated with the metal material by plating or the like can also be used as the conductive aid. Among these conductive aids, the conductive aid preferably contains at least one selected from the group consisting of aluminum, stainless steel, silver, gold, copper, titanium, and carbon, more preferably contains at least one selected from the group consisting of aluminum, stainless steel, silver, gold, and carbon, and still more preferably contains at least one kind of carbon from the viewpoint of electrical stability. These conductive aids may be used singly or in combination of two or more kinds thereof.

The shape of the conductive aid is preferably a particle shape or a fibrous shape. In a case where the conductive aid has a particle shape, the shape of the particles is not particularly limited, and may be any shape such as a powder shape, a spherical shape, a rod shape, a needle shape, a plate shape, a columnar shape, an irregular shape, a scaly shape, and a spindle shape.

In a case where the conductive aid has a particle shape, an average particle diameter (primary particle diameter) is not particularly limited, but is preferably 0.01 um to 10 um from the viewpoint of electrical characteristics of the battery.

In a case where the positive electrode active material layer contains a conductive aid, the content of the conductive aid in the positive electrode active material layer is not particularly limited, but is preferably 0 mass% to 10 mass%, more preferably 2 mass% to 8 mass%, and still more preferably 4 mass% to 7 mass% with respect to the total mass of the positive electrode active material layer. Within such ranges, a stronger electron conduction path can be formed in the positive electrode active material layer, and this can effectively contribute to improvement of battery characteristics.

Meanwhile, the binder is not particularly limited, and examples thereof include the following materials.

Examples of the binder include thermoplastic polymers such as polybutylene terephthalate, polyethylene terephthalate, polyvinylidene fluoride (PVDF) (including a compound in which a hydrogen atom is substituted with another halogen element), polyethylene, polypropylene, polymethylpentene, polybutene, polyether nitrile, polytetrafluoroethylene, polyacrylonitrile, polyimide, polyamide, an ethylene-vinyl acetate copolymer, polyvinyl chloride, styrene-butadiene rubber (SBR), an ethylene-propylene-diene copolymer, a styrene-butadiene-styrene block copolymer and a hydrogenated product thereof, a styrene-isoprene-styrene block copolymer and a hydrogenated product thereof; fluorine resins such as a tetrafluoroethylene-hexafluoropropylene copolymer (FEP), a tetrafluoroethylene-perfluoroalkylvinylether copolymer (PFA), an ethylene-tetrafluoroethylene copolymer (ETFE), polychlorotrifluoroethylene (PCTFE), an ethylene-chlorotrifluoroethylene copolymer (ECTFE), and polyvinyl fluoride (PVF); and vinylidene fluoride-based fluorine rubber such as vinylidene fluoride-hexafluoropropylene-based fluorine rubber (VDF-HFP-based fluorine rubber), vinylidene fluoride-hexafluoropropylene-tetrafluoroethylene-based fluorine rubber (VDF-HFP-TFE-based fluorine rubber), vinylidene fluoride-pentafluoropropylene-based fluorine rubber (VDF-PFP-based fluorine rubber), vinylidene fluoride-pentafluoropropylene-tetrafluoroethylene-based fluorine rubber (VDF-PFP-TFE-based fluorine rubber), vinylidene fluoride-perfluoromethylvinylether-tetrafluoroethylene-based fluorine rubber (VDF-PFMVE-TFE-based fluorine rubber), vinylidene fluoride-chlorotrifluoroethylene-based fluorine rubber (VDF-CTFE-based fluorine rubber); and epoxy resins. Above all, polyimide, styrene-butadiene rubber, carboxymethylcellulose, polypropylene, polytetrafluoroethylene, polyacrylonitrile, and polyamide are more preferred.

The thickness of the positive electrode active material layer varies depending on the configuration of the intended all-solid battery, but is preferably, for example, within a range of 0.1 to 1000 µm.

### [Negative Electrode (Negative Electrode Active Material Layer)]

In the secondary battery according to the present aspect, the negative electrode active material layer 13 contains a negative electrode active material. The type of the negative electrode active material is not particularly limited, and examples thereof include a carbon material, a metal oxide, and a metal active material. Examples of the carbon material include natural graphite, artificial graphite, mesocarbon microbead (MCMB), highly oriented graphite (HOPG), hard carbon, soft carbon, and the like. Examples of the metal oxide include Nb₂O₅, Li₄Ti₅O₁₂, and the like. Further, a silicon-based negative electrode active material or a tin-based negative electrode active material may be used. Here, silicon and tin belong to a Group 14 element, and are known to be a negative electrode active material that can greatly improve the capacity of a non-aqueous electrolyte secondary battery. Since simple substances of silicon and tin can occlude and release a large number of charge carriers (lithium ions and the like) per unit volume (mass), they become a high-capacity negative electrode active material. Here, a Si simple substance is preferably used as the silicon-based negative electrode active material. Similarly, it is also preferable to use a silicon oxide such as SiOₓ(0.3 ≤ x ≤ 1.6) disproportionated into two phases: a Si phase and a silicon oxide phase. At this time, the range of x is more preferably 0.5 ≤ x ≤ 1.5, and still more preferably 0.7 ≤ x ≤ 1.2. Further, an alloy containing silicon (silicon-containing alloy-based negative electrode active material) may be used. Meanwhile, examples of the negative electrode active material containing a tin element (tin-based negative electrode active material) include a Sn simple substance, a tin alloy (a Cu-Sn alloy and a Co-Sn alloy), an amorphous tin oxide, a tin silicon oxide, and the like. Among them, SnB_{0.4}P_{0.6}O_{3.1} is exemplified as the amorphous tin oxide. In addition, SnSiOs is exemplified as the tin silicon oxide. As the negative electrode active material, a metal containing lithium may be used. Such a negative electrode active material is not particularly limited as long as it is an active material containing lithium, and examples thereof include lithium-containing alloys in addition to metal lithium. Examples of the lithium-containing alloys include an alloy of Li and at least one of In, Al, Si, and Sn. In some cases, two or more kinds of negative electrode active materials may be used in combination. Needless to say, a negative electrode active material other than the above-described negative electrode active materials may be used. The negative electrode active material preferably contains metal lithium, a silicon-based negative electrode active material, or a tin-based negative electrode active material, and particularly preferably contains metal lithium.

Examples of a shape of the negative electrode active material include a particle shape (a spherical shape, a fibrous shape), a thin film shape, and the like. In a case where the negative electrode active material has a particle shape, for example, the average particle diameter of the particles is preferably within a range of 1 nm to 100 um, more preferably within a range of 10 nm to 50 um, still more preferably within a range of 100 nm to 20 um, and particularly preferably within a range of 1 to 20 µm.

The content of the negative electrode active material in the negative electrode active material layer is not particularly limited, but for example, is preferably within a range of 40 to 99 mass%, and more preferably within a range of 50 to 90 mass%. The negative electrode active material layer may further contain a solid electrolyte, a conductive aid and/or a binder. As for specific and preferred forms of these materials, those described in the section of the positive electrode active material layer described above can be similarly adopted.

The thickness of the negative electrode active material layer varies depending on the configuration of the intended all-solid battery, but is preferably, for example, within a range of 0.1 to 1000 µm.

### [Solid Electrolyte Layer]

In the secondary battery according to the present aspect, the solid electrolyte layer is a layer that is interposed between the positive electrode active material layer and negative electrode active material layer described above and essentially contains a solid electrolyte. The specific form of the solid electrolyte contained in the solid electrolyte layer is not particularly limited, and the examples and preferred forms described in the section of the positive electrode active material layer are similarly adopted. Hence, it is preferable that the solid electrolyte layer contains a sulfide solid electrolyte, but in this case, the solid electrolyte layer may further contain another solid electrolyte, or may contain only a solid electrolyte other than the sulfide solid electrolyte.

The solid electrolyte layer may further contain a binder in addition to the solid electrolyte described above. As for the binder that can be contained in the solid electrolyte layer, the examples and preferred forms described in the section of the positive electrode active material layer can be similarly adopted.

The thickness of the solid electrolyte layer varies depending on the configuration of the intended lithium-ion secondary battery, but is preferably 600 um or less, more preferably 500 um or less, and still more preferably 400 um or less from the viewpoint that the volume energy density of the battery can be improved. Meanwhile, the lower limit of the thickness of the solid electrolyte layer is not particularly limited, but is preferably 10 um or more, more preferably 50 um or more, and still more preferably 100 um or more.

### [Positive Electrode Current Collecting Plate and Negative Electrode Current Collecting Plate]

A material constituting the current collecting plates (25 and 27) is not particularly limited, and a known highly conductive material conventionally used as a current collecting plate for a secondary battery can be used. As the material constituting the current collecting plates, for example, a metal material such as aluminum, copper, titanium, nickel, stainless steel (SUS), or an alloy thereof is preferred. From the viewpoint of weight reduction, corrosion resistance, and high conductivity, aluminum and copper are more preferred, and aluminum is particularly preferred. An identical material or different materials may be used for the positive electrode current collecting plate 27 and the negative electrode current collecting plate 25.

### [Positive Electrode Lead and Negative Electrode Lead]

Although not illustrated, the current collector (11' or 11") and the current collecting plate (25 or 27) may be electrically connected with a positive electrode lead or a negative electrode lead interposed therebetween. As a material constituting the positive electrode lead and the negative electrode lead, a material used in a known lithium-ion secondary battery can be similarly adopted. The portion taken out from an outer casing is preferably covered with a heat resistant and insulating heat shrinkable tube or the like so as not to affect a product (e.g., an automotive component, particularly an electronic device, or the like) due to electric leakage caused by contact with peripheral devices, wiring lines, or the like.

### [Battery Outer Casing Material]

As the battery outer casing material, a known metal can case can be used, and a bag-shaped case using the aluminum-containing laminate film 29, which can cover a power-generating element as illustrated in Figs. 1 and 2, can be used. As the laminate film, for example, a laminate film or the like having a three-layer structure formed by laminating PP, aluminum, and nylon can be used, but the laminate film is not limited thereto. The laminate film is desirable from the viewpoint of high output and excellent cooling performance, and suitable application for batteries for large devices for EV and HEV. Further, from the perspective of easy adjustment of a group pressure applied to the power-generating element from an outside, the outer casing body is more preferably a laminate film containing aluminum.

The laminate type battery according to the present aspect has a configuration in which a plurality of single battery layers is connected in parallel, and thus has a high capacity and excellent cycle durability. Therefore, the laminate type battery according to the present aspect is suitably used as a power source for driving EV and HEV.

Although one embodiment of the lithium-ion secondary battery has been described above, the present invention is not limited to only the configurations described in the above-described embodiment, and can be appropriately changed based on the description of the claims.

The type of battery to which the lithium-ion secondary battery according to the present invention is applied, is for example, a bipolar type (bipolar type) battery including a bipolar electrode having a positive electrode active material layer electrically coupled to one surface of a current collector and a negative electrode active material layer electrically coupled to an opposite surface of the current collector.

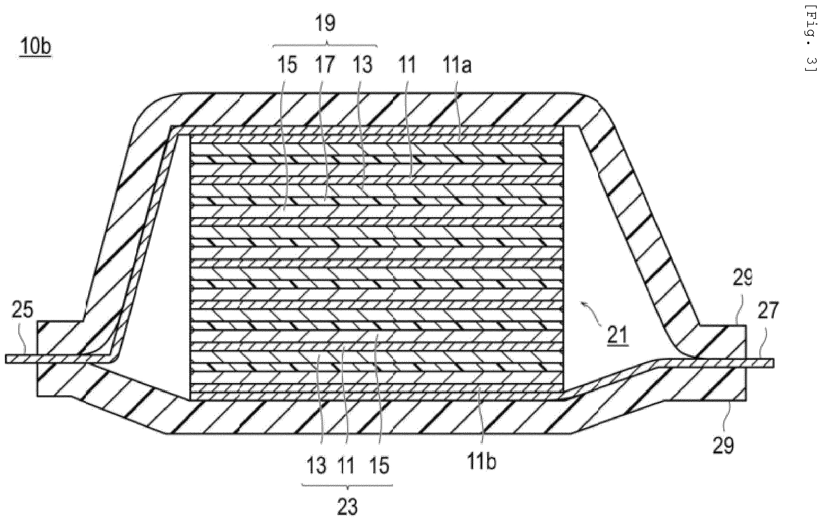

Fig. 3 is a cross-sectional view schematically illustrating a bipolar type (bipolar type) lithium-ion secondary battery (hereinafter, also simply referred to as "bipolar secondary battery") as one embodiment of the lithium-ion secondary battery according to the present invention. A bipolar type secondary battery 10b illustrated in Fig. 3 has a structure in which a substantially rectangular power-generating element 21 in which a charge and discharge reaction actually proceeds is sealed inside the laminate film 29 as the battery outer casing body.

As illustrated in Fig. 3, the power-generating element 21 of the bipolar type secondary battery 10b of the present embodiment has a plurality of bipolar type electrodes 23 in which the positive electrode active material layer 15 electrically coupled to one surface of a current collector 11 is formed, and the negative electrode active material layer 13 electrically coupled to an opposite surface of the current collector 11 is formed. The bipolar type electrodes 23 are laminated with the solid electrolyte layer 17 interposed therebetween to form the power-generating element 21. The solid electrolyte layer 17 has a configuration in which a solid electrolyte is formed in layers. As illustrated in Fig. 3, the solid electrolyte layer 17 is disposed to be sandwiched between the positive electrode active material layer 15 of one bipolar type electrode 23 and the negative electrode active material layer 13 of another bipolar type electrode 23 adjacent to the one bipolar type electrode 23.

The positive electrode active material layer 15, the solid electrolyte layer 17, and the negative electrode active material layer 13 that are adjacent constitute one single battery layer 19. Therefore, it can also be said that the bipolar type secondary battery 10b has a configuration in which the single battery layers 19 are laminated. The positive electrode active material layer 15 is formed only on one surface of an outermost layer current collector 11a on the positive electrode side located in an outermost layer of the power-generating element 21. Further, the negative electrode active material layer 13 is formed only on one surface of an outermost layer current collector 11b on the negative electrode side located in an outermost layer of the power-generating element 21.

Further, in the bipolar type secondary battery 10b illustrated in Fig. 3, a positive electrode current collecting plate (positive electrode tab) 25 is disposed so as to be adjacent to the outermost layer current collector 11a on the positive electrode side, and is extended to be led out from the laminate film 29 as the battery outer casing body. Meanwhile, the negative electrode current collecting plate (negative electrode tab) 27 is disposed so as to be adjacent to the outermost layer current collector 11b on the negative electrode side, and is similarly extended to be led out from the laminate film 29.

The number of times of lamination of the single battery layers 19 is adjusted according to a desired voltage. Further, in the bipolar type secondary battery 10b, the number of times of lamination of the single battery layers 19 may be reduced as long as sufficient output can be secured even when the thickness of the battery is reduced as much as possible. Also, the bipolar type secondary battery 10b preferably has a structure in which the power-generating element 21 is sealed in the laminate film 29 as the battery outer casing body under reduced pressure, and the positive electrode current collecting plate 27 and the negative electrode current collecting plate 25 are extended to the outside of the laminate film 29 in order to prevent external impact and environmental deterioration during use.

Further, the secondary battery according to the present aspect need not be an all-solid type. Hence, the solid electrolyte layer may further contain a conventionally known liquid electrolyte (electrolyte solution). The amount of the liquid electrolyte (electrolyte solution) that can be contained in the solid electrolyte layer is not particularly limited, but is preferably such an amount that the shape of the solid electrolyte layer formed by the solid electrolyte is maintained and liquid leakage of the liquid electrolyte (electrolyte solution) does not occur.

The liquid electrolyte (electrolyte solution) that can be used has a form in which a lithium salt is dissolved in an organic solvent. Examples of the organic solvent to be used include dimethyl carbonate (DMC), diethyl carbonate (DEC), dipropyl carbonate (DPC), ethyl methyl carbonate (EMC), methyl propionate (MP), methyl acetate (MA), methyl formate (MF), 4-methyl dioxolane (4MeDOL), dioxolane (DOL), 2-methyltetrahydrofuran (2MeTHF), tetrahydrofuran (THF), dimethoxyethane (DME), propylene carbonate (PC), butylene carbonate (BC), dimethylsulfoxide (DMSO), γ-butyrolactone (GBL), and the like. Among all, the organic solvent is preferably chain carbonate, is more preferably at least one selected from the group consisting of diethyl carbonate (DEC), ethyl methyl carbonate (EMC), and dimethyl carbonate (DMC), and is more preferably selected from ethyl methyl carbonate (EMC) and dimethyl carbonate (DMC), from the viewpoint of further improving rapid charge characteristics and output characteristics.

Examples of the lithium salt include Li(FSO₂)₂N (lithium bis (fluorosulfonyl) imide) ; LiFSI), Li(C₂F₅SO₂)₂N, LiPF₆, LiBF₄, LiClO₄, LiAsF₆, LiCF₃SO₃, and the like. Above all, the lithium salt is preferably Li(FSO₂)₂N(LiFSI) from the viewpoint of battery output and charge and discharge cycle characteristics.

The liquid electrolyte (electrolyte solution) may further contain an additive other than the components described above. Specific examples of such a compound include ethylene carbonate, vinylene carbonate, methylvinylene carbonate, dimethylvinylene carbonate, phenylvinylene carbonate, diphenylvinylene carbonate, ethylvinylene carbonate, diethylvinylene carbonate, vinylethylene carbonate, 1,2-divinylethylene carbonate, 1-methyl-1-vinylethylene carbonate, 1-methyl-2-vinylethylene carbonate, 1-ethyl-1-vinylethylene carbonate, 1-ethyl-2-vinylethylene carbonate, vinylvinylene carbonate, arylethylene carbonate, vinyloxymethylethylene carbonate, aryloxymethylethylene carbonate, acryloxymethylethylene carbonate, methacryloxymethylethylene carbonate, ethynylethylene carbonate, propargylethylene carbonate, ethynyloxymethylethylene carbonate, propargyloxyethylene carbonate, methylene ethylene carbonate, 1,1-dimethyl-2-methylene ethylene carbonate, and the like. These additives may be used singly or in combination of two or more kinds thereof. The amount of the additive used in the electrolyte solution can be appropriately adjusted.

### [Assembled Battery]

An assembled battery is one configured by connecting a plurality of batteries. In detail, the assembled battery is one configured by serializing, parallelizing, or both serializing and parallelizing at least two or more batteries. It is possible to freely adjust the capacity and the voltage by serializing and parallelizing the batteries.

A plurality of batteries may be connected in series or in parallel to form an attachable and detachable compact assembled battery. Further, a plurality of such attachable and detachable compact assembled batteries may be connected in series or in parallel to form an assembled battery (such as a battery module or a battery pack) having a large capacity and a large output suitable for a power source for driving a vehicle and an auxiliary power source which require a high volume energy density and a high volume output density. How many batteries are connected to produce an assembled battery and how many stages of compact assembled batteries are laminated to produce a large-capacity assembled battery may be determined according to a battery capacity or output of a vehicle (electric vehicle) on which the assembled battery is to be mounted.

### [Vehicle]

A battery or an assembled battery formed by combining a plurality of batteries can be mounted on a vehicle. In the present invention, a long-life battery having excellent long-term reliability can be configured, and thus mounting such a battery can provide a plug-in hybrid electric vehicle having a long EV traveling distance or an electric vehicle having a long one charge traveling distance. This is because a long-life and highly reliable automobile is provided when a battery or an assembled battery formed by combining a plurality of batteries is used, for example, for a hybrid vehicle, a fuel cell vehicle, or an electric vehicle (each encompasses a four-wheeled vehicle (a passenger car, a commercial car such as a truck or a bus, a light vehicle, and the like), a two-wheeled vehicle (motorcycle), and a three-wheeled vehicle) in the case of an automobile. However, the application is not limited to automobiles, and for example, the present invention can also be applied to various power sources of other vehicles, for example, movable bodies such as trains and can also be used as a mounting power source of an uninterruptible power system or the like.

### Examples

Hereinbelow, the present invention will be described in more detail with reference to Examples. However, the technical scope of the present invention is not limited to the following Examples.

### <<Production Example of Positive Electrode>>

<Production Example 1: A production example of a positive electrode in which the ratio of the content of the positive electrode active material to the total content of the positive electrode active material and the solid electrolyte in the positive electrode active material layer is 70 vol%>

### [Comparative Example 1-1]

An argyrodite type solid electrolyte (Li₆PS₅Cl) as a lithium-ion conductive sulfide solid electrolyte was prepared. In addition, lithium-containing metal oxide (composition = LiNi_{0.8}Mn_{0.1}Co_{0.1}O₂) as a positive electrode active material and acetylene black as a conductive aid were prepared.

90 parts by mass in total of the positive electrode active material and the sulfide solid electrolyte prepared above and 5 parts by mass of the conductive aid were once mixed in an agate mortar, and the resultant mixture was further mixed and stirred using a planetary ball mill. At this time, the blending amounts of the positive electrode active material and the solid electrolyte were adjusted so that the ratio of the content of the positive electrode active material to the total content of the positive electrode active material and the solid electrolyte was 70 vol%. Next, 5 parts by mass of styrene-butadiene rubber (SBR) as a binder was added to the resultant mixed powder, and an appropriate amount of 40 parts by mass of xylene as a solvent was added and mixed to prepare a positive electrode active material slurry.

The positive electrode active material slurry prepared above was applied onto one surface of an aluminum foil (thickness: 20 um) as a positive electrode current collector, and the solvent was volatilized to form a coating film. Then, the coating film was densified by a pressing process using a roll press machine to form a positive electrode active material layer (thickness: 50 um), thereby obtaining a positive electrode of this comparative example.

Here, the average particle diameter of secondary particles of the positive electrode active material (lithium-containing metal oxide) contained in the positive electrode active material layer of the obtained positive electrode and the average particle diameter of primary particles constituting the secondary particles were measured by the following method, and found to be 7.1 um and 1.5 um, respectively. The average particle diameter of primary particles of the sulfide solid electrolyte was measured by the following method, and found to be 0.8 um. Further, the porosity of the positive electrode active material layer of the obtained positive electrode was measured by the following method, and found to be 8.8. In addition, a ratio of the number of particles damaged by the pressing process, among the positive electrode active material particles contained in the positive electrode active material layer of the obtained positive electrode, was measured by the following method, and found to be 9.8%.

### (Method for Measuring Average Particle Diameter and Porosity)

A cross section of the produced positive electrode active material layer was observed and evaluated using a scanning electron microscope (SEM) and an energy dispersive X-ray analyzer (EDX).

The average particle diameter (arithmetic average diameter) of the primary particles of the positive electrode active material was determined by measuring the particle diameter (maximum distance among distances between any two points on a contour line of the observed particle) on 50 or more particles without any grain boundary that could be confirmed from the cross section of the positive electrode active material, and calculating the arithmetic average value thereof.

The average particle diameter (arithmetic average diameter) of the secondary particles of the positive electrode active material was determined by measuring the particle diameter on the group of 50 or more primary particles without any other substance present therebetween and calculating the arithmetic average value thereof.

In addition, the ratio of the number of the positive electrode active material particles damaged by the pressing process was also calculated based on the SEM observation image.

The average particle diameter of the primary particles of the solid electrolyte was determined by measuring the particle diameter (maximum distance among distances between any two points on a contour line of the observed particle) on 50 or more particles without any grain boundary that could be confirmed from the cross section of the solid electrolyte, and calculating the arithmetic average value thereof. At this time, when an irregular shaped particle was determined as a particle formed of two or more welded particles, and the particle was not counted.

The porosity of the positive electrode active material layer was also determined by analyzing the observation image of the cross section of the produced positive electrode active material layer.

The value of the ratio (volume ratio) of the content of the positive electrode active material to the total content of the positive electrode active material and the solid electrolyte in the positive electrode active material layer can also be calculated by analyzing the observation image of the cross section of the produced positive electrode active material layer. Specifically, the volume ratio was calculated from the area ratio of each of the positive electrode active material and the solid electrolyte by EDX analysis. The area used for the calculation was 3000 µm², which was sufficient. In addition, peaks of Ni, Mn, and Co were used as indices for detecting the positive electrode active material, and peaks of S and P were used as indices for detecting the solid electrolyte.

### [Comparative Example 1-2]

A positive electrode of this comparative example was produced in the same method as in Comparative Example 1-1 described above, except that the conditions of the pressing process were changed so that the porosity of the positive electrode active material layer was 9.5%.

### [Comparative Example 1-3]

A positive electrode of this comparative example was produced in the same manner as in Comparative Example 1-1 described above, except that a positive electrode active material (lithium-containing metal oxide) in which the average particle diameter of secondary particles and the average particle diameter of primary particles constituting the secondary particles were 10.1 µm and 0.8 um, respectively, was used. The porosity of the positive electrode active material layer in the positive electrode thus obtained was 9.2%.

### [Comparative Example 1-4]

A positive electrode of this comparative example was produced in the same manner as in Comparative Example 1-1 described above, except that a positive electrode active material (lithium-containing metal oxide) in which the average particle diameter of secondary particles and the average particle diameter of primary particles constituting the secondary particles were 3.9 µm and 1.0 um, respectively, was used. The porosity of the positive electrode active material layer in the positive electrode thus obtained was 9.0%.

### [Example 1-1]

A positive electrode of this example was produced in the same manner as in Comparative Example 1-1 described above, except that a positive electrode active material (lithium-containing metal oxide) in which the average particle diameter of secondary particles and the average particle diameter of primary particles constituting the secondary particles were 4.9 µm and 2.3 um, respectively, was used. The porosity of the positive electrode active material layer in the positive electrode thus obtained was 8.1%.

### [Example 1-2]

A positive electrode of this example was produced in the same method as in Example 1-1 described above, except that the conditions of the pressing process were changed so that the porosity of the positive electrode active material layer was 10.1%.

### [Example 1-3]

A positive electrode of this example was produced in the same manner as in Example 1-1 described above, except that a positive electrode active material (lithium-containing metal oxide) in which the average particle diameter of secondary particles and the average particle diameter of primary particles constituting the secondary particles were 3.6 µm and 1.2 um, respectively, was used. The porosity of the positive electrode active material layer in the positive electrode thus obtained was 8.5%.

### [Comparative Example 1-5]

A positive electrode of this comparative example was produced in the same method as in Example 1-1 described above, except that a solid electrolyte in which the average particle diameter of primary particles was 1.0 um was used. The porosity of the positive electrode active material layer in the positive electrode thus obtained was 8.5%.

<Production Example 2: A production example of a positive electrode in which the ratio of the content of the positive electrode active material to the total content of the positive electrode active material and the solid electrolyte in the positive electrode active material layer is 75 vol%>

### [Comparative Example 2-1]

A positive electrode of this comparative example was produced in the same method as in Comparative Example 1-1 described above, except that, when preparing the positive electrode active material slurry, the blending amounts of the positive electrode active material and the solid electrolyte were adjusted such that the ratio of the content of the positive electrode active material to the total content of the positive electrode active material and the solid electrolyte was 75 vol%. The porosity of the positive electrode active material layer in the positive electrode thus obtained was 8.9%.

### [Comparative Example 2-2]

A positive electrode of this comparative example was produced in the same manner as in Comparative Example 2-1 described above, except that a positive electrode active material (lithium-containing metal oxide) in which the average particle diameter of secondary particles and the average particle diameter of primary particles constituting the secondary particles were 10.1 µm and 0.8 um, respectively, was used. The porosity of the positive electrode active material layer in the positive electrode thus obtained was 9.9%.

### [Comparative Example 2-3]

A positive electrode of this comparative example was produced in the same manner as in Comparative Example 2-1 described above, except that a positive electrode active material (lithium-containing metal oxide) in which the average particle diameter of secondary particles and the average particle diameter of primary particles constituting the secondary particles were 3.9 µm and 1.0 um, respectively, was used. The porosity of the positive electrode active material layer in the positive electrode thus obtained was 9.8%.

### [Example 2-1]

A positive electrode of this example was produced in the same manner as in Comparative Example 1-1 described above, except that a positive electrode active material (lithium-containing metal oxide) in which the average particle diameter of secondary particles and the average particle diameter of primary particles constituting the secondary particles were 4.9 µm and 2.3 um, respectively, was used. The porosity of the positive electrode active material layer in the positive electrode thus obtained was 9.9%.

### [Example 2-2]

A positive electrode of this example was produced in the same manner as in Example 1-1 described above, except that a positive electrode active material (lithium-containing metal oxide) in which the average particle diameter of secondary particles and the average particle diameter of primary particles constituting the secondary particles were 3.6 µm and 1.2 um, respectively, was used. The porosity of the positive electrode active material layer in the positive electrode thus obtained was 9.1%.

### [Comparative Example 2-4]

A positive electrode of this comparative example was produced in the same method as in Example 2-1 described above, except that a solid electrolyte in which the average particle diameter of primary particles was 1.0 um was used. The porosity of the positive electrode active material layer in the positive electrode thus obtained was 9.8%.

<Production Example 3: A production example of a positive electrode in which the ratio of the content of the positive electrode active material to the total content of the positive electrode active material and the solid electrolyte in the positive electrode active material layer is 80 vol%>

### [Comparative Example 3-1]

A positive electrode of this comparative example was produced in the same method as in Comparative Example 1-1 described above, except that when preparing the positive electrode active material slurry, the blending amounts of the positive electrode active material and the solid electrolyte were adjusted such that the ratio of the content of the positive electrode active material to the total content of the positive electrode active material and the solid electrolyte was 80 vol%. The porosity of the positive electrode active material layer in the positive electrode thus obtained was 9.8%.

### [Comparative Example 3-2]

A positive electrode of this comparative example was produced in the same method as in Comparative Example 3-1 described above, except that as a positive electrode active material (lithium-containing metal oxide) in which the average particle diameter of secondary particles and the average particle diameter of primary particles constituting the secondary particles were 10.1 µm and 0.8 um, respectively, was used, and the conditions of the pressing process were changed so that the porosity of the positive electrode active material layer was 10.1%.

### [Comparative Example 3-3]

A positive electrode of this comparative example was produced in the same method as in Comparative Example 1-3 described above, except that, when preparing the positive electrode active material slurry, the blending amounts of the positive electrode active material and the solid electrolyte were adjusted such that the ratio of the content of the positive electrode active material to the total content of the positive electrode active material and the solid electrolyte was 80 vol%. The porosity of the positive electrode active material layer in the positive electrode thus obtained was 9.9%.

### [Comparative Example 3-4]

A positive electrode of this comparative example was produced in the same method as in Comparative Example 1-5 described above, except that, when preparing the positive electrode active material slurry, the blending amounts of the positive electrode active material and the solid electrolyte were adjusted such that the ratio of the content of the positive electrode active material to the total content of the positive electrode active material and the solid electrolyte was 80 vol%. The porosity of the positive electrode active material layer in the positive electrode thus obtained was 9.7%.

### [Example 3-1]

A positive electrode of this comparative example was produced in the same method as in Comparative Example 3-4 described above, except that a solid electrolyte in which the average particle diameter of primary particles was 0.8 um was used. The porosity of the positive electrode active material layer in the positive electrode thus obtained was 9.0%.

### <<Evaluation Example of Positive Electrode>>

A test cell was produced by the following method, a charge and discharge test was performed to evaluate each of the positive electrodes produced above.

### <Production Example of Test Cell>

First, the sulfide solid electrolyte and a binder (SBR) prepared above were mixed at a mass ratio of 95 : 5, an appropriate amount of xylene was added as a solvent, and the mixture was mixed to prepare a solid electrolyte slurry.

The solid electrolyte slurry prepared above was applied to the exposed surface of the positive electrode active material layer produced above, and the solvent was volatilized to form a solid electrolyte layer (thickness: 80 µm). Then, the laminated body including the positive electrode current collector/positive electrode active material layer/solid electrolyte layer thus obtained was cut out so that the size of the coated area of the positive electrode active material layer was 2.5 cm × 2.0 cm.

Thereafter, to the exposed surface of the solid electrolyte layer of the laminated body thus cut out, a negative electrode having the same dimension as that of the laminated body was attached, and the resultant body was pressed at a pressing pressure of 10 MPa, and thus pressure-bonded to the solid electrolyte layer. As the negative electrode, a laminated body obtained by laminating a metal lithium (Li) foil (thickness: 100 um) and a nickel (Ni) foil (thickness: 20 um) was used, and the Li foil was disposed so as to be located at the solid electrolyte layer side.

Finally, an aluminum (Al) tab lead and a nickel (Ni) tab lead were welded to an aluminum (Al) foil as the positive electrode current collector and a Ni foil constituting the negative electrode, respectively, and the obtained cell was sealed inside an outer casing body made of an aluminum laminate film to produce a test cell.

### <Evaluation Example by Charge and Discharge Test>

The charge and discharge test was performed under a temperature condition of 25°C with the upper and lower limit voltages set to a range of 1.9 to 3.7 V and the magnitude of the current corresponding to 0.05 C in C rate. Thereafter, the specific capacity was determined by calculating the value of the initial discharge capacity at the time of the charge and discharge test as a value per unit mass of the positive electrode active material. Next, the specific capacity value thus obtained was calculated as a value per unit mass of the mixture constituting the positive electrode active material layer to obtain a capacity density of the positive electrode mixture.

Then, for each of Production Examples 1 to 3, when the value of the capacity density of the positive electrode mixture in the example having the largest capacity among the Comparative Examples was used as the reference, the rate of increase or decrease (%) in the capacity density of the positive electrode mixture of each of the Comparative Examples and the Examples was calculated. The results are shown in Table 1 below.

**[Table 1]**

| | Ratio of active material in positive electrode active material layer | Secondary particle diameter of positive electrode active material | Primary particle diameter of positive electrode active material | Primary particle diameter of solid electrolyte | Porosity of positive electrode active material layer | Ratio of number of positive electrode active material particles damaged | Rate of increase or decrease in discharge capacity |
|---|---|---|---|---|---|---|---|
| | vol% | µm | µm | µm | % | % | % |
| Comparative Example 1-1 | 70 | 7.1 | 1.5 | 0.8 | 8.8 | 9.8 | 0.0 (Reference) |
| Comparative Example 1-2 | 70 | 7.1 | 1.5 | 0.8 | 9.5 | 6.5 | -4.2 |
| Comparative Example 1-3 | 70 | 10.1 | 0.8 | 0.8 | 9.2 | 48 | -18.3 |
| Comparative Example 1-4 | 70 | 3.9 | 1 | 0.8 | 9 | 6.9 | -17.1 |
| **Example 1-1** | **70** | **4.9** | **2.3** | 0.8 | **8.1** | **0.3** | **9.6** |
| **Example 1-2** | **70** | **4.9** | **2.3** | 0.8 | **10.1** | **0.3** | **7.2** |
| **Example 1-3** | **70** | **3.6** | **1.2** | 0.8 | **8.5** | **0.3** | **7.4** |
| Comparative Example 1-5 | 70 | 4.9 | 2.3 | 1 | 8.5 | 0.3 | -16.7 |
| Comparative Example 2-1 | 75 | 7.1 | 1.5 | 0.8 | 8.9 | 17 | 0.0 (Reference) |
| Comparative Example 2-2 | 75 | 10.1 | 0.8 | 0.8 | 9.9 | 52 | -21.4 |
| Comparative Example 2-3 | 75 | 3.9 | 1 | 0.8 | 9.8 | 7.7 | -28.4 |
| **Example 2-1** | **75** | **4.9** | **2.3** | 0.8 | **9.9** | **0.5** | **10.5** |
| **Example 2-2** | **75** | **3.6** | **1.2** | 0.8 | **9.1** | **0.1** | **11.2** |
| Comparative Example 2-4 | 75 | 4.9 | 2.3 | 1 | 9.8 | 3.9 | -31.6 |
| Comparative Example 3-1 | 80 | 7.1 | 1.5 | 0.8 | 9.8 | 76 | 35.7 |
| Comparative Example 3-2 | 80 | 10.1 | 0.8 | 0.8 | 10.1 | 32 | -42.9 |
| Comparative Example 3-3 | 80 | 10.1 | 0.8 | 0.8 | 9.9 | 70 | 0.0 (Reference) |
| Comparative Example 3-4 | 80 | 4.9 | 2.3 | 1 | 9.7 | 6 | -17.2 |
| Example **3-1** | **80** | **4.9** | **2.3** | 0.8 | **9** | **0.9** | **81.5** |

The results shown in Table 1 show that, in comparing groups having the same ratio of the active material in the positive electrode active material layer, when the average particle diameter of secondary particles of the positive electrode active material, the average particle diameter of primary particles constituting the secondary particles, and the average particle diameter of primary particles of the solid electrolyte are values within a predetermined range of the present application, it is possible to suppress destruction of particles of positive electrode active material due to the pressing pressure at the time of producing an electrode, thereby inhibiting decrease in a battery capacity.

### Reference Signs List

- 10, 10a: Laminate type battery
- 10b: Bipolar type battery
- 11: Current collector
- 11': Negative electrode current collector
- 11": Positive electrode current collector
- 13: Negative electrode active material layer
- 15: Positive electrode active material layer
- 17: Solid electrolyte layer
- 19: Single battery layer
- 21: Power-generating element
- 25: Negative electrode current collecting plate
- 27: Positive electrode current collecting plate
- 29: Laminate film

## Claims

1. A positive electrode for a secondary battery comprising a positive electrode active material layer which contains a positive electrode active material consisting of secondary particles and a solid electrolyte,
wherein an average particle diameter of the secondary particles is 4.9 um or less, an average particle diameter of primary particles which constitutes the secondary particles is 1.2 um or more, and an average particle diameter of primary particles of the solid electrolyte is 0.8 um or less.

2. The positive electrode for a secondary battery according to claim 1, wherein a ratio of a content of the positive electrode active material to a total content of the positive electrode active material and the solid electrolyte in the positive electrode active material layer is 70 vol% or more.

3. The positive electrode for a secondary battery according to claim 1 or 2, wherein a porosity of the positive electrode active material layer is 10.1% or less.

4. The positive electrode for a secondary battery according to any one of claims 1 to 3, wherein the positive electrode active material includes Li(Ni-Mn-Co)O₂ or an NMC composite oxide having a composition in which a part of these transition metals is substituted with other elements.

5. The positive electrode for a secondary battery according to any one of claims 1 to 4, wherein the average particle diameter of the secondary particles is 3.6 um or more.

6. The positive electrode for a secondary battery according to any one of claims 1 to 5, wherein the average particle diameter of the primary particles is 2.3 um or less.

7. The positive electrode for a secondary battery according to any one of claims 1 to 6, wherein the porosity of the positive electrode active material layer is 8.1% or more.

8. The positive electrode for a secondary battery according to any one of claims 1 to 7, wherein the solid electrolyte includes a sulfide solid electrolyte.

9. A secondary battery comprising the positive electrode for a secondary battery according to any one of claims 1 to 8.

10. The secondary battery according to claim 9, wherein the secondary battery is an all-solid lithium-ion secondary battery.
